# FASCICULE DE BREVET EUROPEEN

(11) **EP 2 875 288 B1**
(45) Date de publication et mention de la délivrance du brevet: **14.09.2016**
(21) Numéro de dépôt: 13747458.1
(22) Date de dépôt: 17.07.2013
(51) Int. Cl.: F21V 33/00, F21V 8/00, G02B 6/00, F21Y 115/10, F21Y 103/10

(54) **CLOISON ECLAIRANTE**
BELEUCHTUNGSWAND
ILLUMINATING WALL

(30) Priorité: 23.07.2012 FR 1257104
(43) Date de publication de la demande: 27.05.2015
(73) Titulaire: Saint-Gobain Glass France, 92400 Courbevoie (FR)
(72) Inventeur: GIERENS, Anne, 40545 DUSSELDORF (DE); NAVARRO, Christian, F-60880 Jaux (FR); ZHANG, Jingwei, F-91300 Massy (FR)
(74) Mandataire: Ribeaudeau, Marion Christine
(86) Numéro de dépôt international: PCT/FR2013/051724
(87) Numéro de publication internationale: WO 2014/016494

(56) Documents cités:
- EP-A1- 2 101 309
- WO-A1-02/052191
- WO-A1-2008/089759
- DE-A1- 10 322 561

## Description

L'invention concerne une cloison éclairante, en particulier en verre, et ses profilés de montage.

Un élément verrier comportant les caractéristiques techniques du préambule de la revendication 1 est connu de DE 103 22 561 A1.

La cloison éclairante de l'invention est destinée à tout type d'utilisation en extérieur et/ou intérieur, dans un bâtiment ou dans un véhicule (notamment de transport...) dans un espace public, telle qu'une séparation entre pièces, une séparation pour compartiment, une séparation à l'intérieur d'une même pièce, une porte, une vitrine, un comptoir, un dispositif de décoration d'intérieur, un garde-corps, un produit d'ameublement, un luminaire sur pied en particulier à forme parallélépipédique formant séparation, etc...

L'utilisation d'une telle cloison est notamment de fournir une paroi transparente et éclairante qui assure la séparation d'un espace ; la cloison permet de constituer une séparation physique éclairante délimitant de part et d'autre des zones d'occupation de l'espace. Il s'agit ici d'une application totalement éloignée d'un module éclairant du type pour écran de visualisation ou panneau de signalétique.

Une cloison est destinée à reposer de tout son poids sur une surface d'accueil, généralement un sol.

Si certains modules éclairants éloignés des applications de cloison (par exemple écran de visualisation) comprennent de manière connue des modules verriers et des systèmes d'éclairage associés aux tranches des modules, les systèmes d'éclairage pour cloisons éclairantes actuelles ne sont nullement situés au niveau des tranches des modules mais disposés à l'intérieur de la cloison contre les faces principales des feuilles de verre des modules, en raison du poids des modules.

En effet, on ne peut pas transposer à une cloison verrière la solution d'association du système d'éclairage, souvent des diodes électroluminescentes, à la tranche inférieure d'un module verrier du type écran de visualisation, car le problème technique dans cette dernière application, de risque d'écrasement en raison du poids du module sur le système d'éclairage ne se pose pas, ce qui n'est pas le cas pour une cloison.

L'invention a pour but de proposer une nouvelle génération de cloison éclairante en verre, robuste, écologique avec une installation simple et sure, et procurant un remplacement aisé et fiable du système d'éclairage constitué de diodes électroluminescentes, en particulier en cas de défaillance ou de changement de performances optiques, ou de couleur, etc...

Dans la suite de la description, les termes « horizontal », « vertical », « supérieur », « inférieur », « haut », « bas », s'entendent en qualifiant des éléments utilisés dans le cadre d'une installation normale de la cloison, c'est-à-dire relative à une notion verticale par rapport à une surface ou sol (plat) horizontal sur lequel serait posée (voire fixée) ladite cloison. Le terme « latéral » qualifie le côté, le bord d'un élément dans un plan vertical.

Selon l'invention, la cloison comprend
- au moins un module verrier ou vitrage,
- des diodes disposées sur au moins un dispositif de support du type PCB, le ou les PCB étant éventuellement sur ou logés dans un profilé d'accueil, les diodes étant disposés en regard du chant du vitrage,
- au moins un profilé de montage inférieur et un profilé de montage supérieur, chaque profilé de montage comportant une âme, une première aile perpendiculaire à l'âme, et une seconde aile perpendiculaire à l'âme, parallèle et espacée de la première aile, et le profilé de montage délimitant un volume intérieur,
- au moins un élément porteur distinct de tout élément accueillant les diodes, et espacé de tout élément accueillant les diodes pour le profilé de montage inférieur, notamment distinct des PCB ou du profilé d'accueil des PCB, ledit élément porteur étant agencé dans le volume intérieur du profilé de montage inférieur et/ou supérieur, et comprenant des moyens de support tels qu'une platine qui est (parallèle et) à distance de l'âme du profilé de montage et située entre le chant du vitrage et les diodes, et par ailleurs
- la platine de l'élément porteur est associée à la première aile du profilé et présente un bord libre en regard de la seconde aile du profilé (le bord libre peut ne pas être en contact direct avec la seconde aile en lui étant de préférence espacé, ou bien lui être connectée de manière amovible),
- en position basse de la cloison, la platine supporte le vitrage directement ou via une éventuelle cale transparente sus jacente,
- et/ou en position haute, le(s) PCB et/ou le profilé d'accueil du ou des PCB sont posés sur la platine (la platine est agencée à proximité de l'extrémité ouverte en U dudit profilé supérieur, de préférence espacée du chant du vitrage, en particulier de l'ordre du millimètre),
- le(s) PCB avec les diodes sont dissociable(s) de la cloison, voire le profilé d'accueil de PCB est dissociable de la cloison,
- la seconde aile des profilés inférieur et supérieur est mobile ou amovible, de sorte que le(s) PCB ou le profilé d'accueil des PCB à diodes sont accessibles latéralement (au vitrage), de préférence directement au niveau des PCB ou du profilé d'accueil.

Ainsi, il n'est pas nécessaire de démonter l'ensemble de la cloison, en particulier retirer préalablement le ou les modules verriers hors du profilé de montage, pour accéder aux diodes et les remplacer.

Les diodes sont protégées lors du montage des modules verriers, et leur accès est très aisé à tout moment sans nécessiter le démontage des modules.

Dans la suite de la description, le terme vitrage est équivalent à module verrier.

Le système d'éclairage est agencé par exemple sur deux côtés opposés de la cloison, de préférence au niveau des côtés horizontaux supérieur et/ou inférieur du ou des modules en position montée de la cloison.

Pour la partie haute de la cloison, lorsqu'un système d'éclairage y est également associé, le profilé de montage comprend donc également une aile mobile ou amovible pour avoir accès au système d'éclairage.

Selon l'invention, le profilé de montage pour cloison éclairante comprenant une âme, une première aile perpendiculaire à l'âme, et une seconde aile perpendiculaire à l'âme, parallèle et espacée de la première aile, de sorte à ménager un volume d'accueil de section générale en U, comprend au moins un élément porteur agencé dans le volume intérieur en U et comprenant des moyens de support tels qu'une platine parallèle et à distance de l'âme du profilé et dont un bord est associé à la première aile du profilé tandis que le bord opposé, qui est en regard de la seconde aile du profilé, n'est pas associé fixement à ladite seconde aile, et la seconde aile du profilé est mobile ou amovible.

On entend par « relié » ou « connecté », la qualification d'une solidarisation fixe lors de la fabrication du profilé, la portion reliée ne formant qu'un seul ensemble unitaire avec le corps du profilé, ou d'une solidarisation fixe après fabrication du corps du profilé, lorsque la portion reliée est rapportée et fixée de manière permanente au corps du profilé. Ces termes sont relatifs à une notion de solidarisation permanente au contraire d'une fixation détachable.

Le corps du profilé s'entend par l'ensemble fabriqué du profilé fait d'une seule pièce monobloc et formant d'un seul tenant ses différentes parties, âme ailes et autres éléments.

Le terme « **associé »** dans la suite de la description n'est pas limitatif en terme de solidarisation ou fixation. Il s'entend par une jonction de deux parties faisant corps monobloc l'une avec l'autre ou reliées l'une à l'autre par une solidarisation fixe permanente, ou encore par une jonction amovible de deux parties.

L'emploi du terme « **mobile »** dans la suite de la description au regard de l'aile s'entend par apte à pivoter tout en étant solidaire du corps du profilé par au moins une partie, ou bien amovible, c'est-à-dire apte à être totalement détachée.

Le profilé de montage inférieur de l'invention permet de supporter au regard de leur poids, le ou les modules verriers en évitant qu'ils ne reposent sur le système d'éclairage et ne l'écrase. L'élément porteur par ses moyens de support (la platine) constitue une plate-forme pour supporter la tranche d'un module verrier ou vitrage. De plus, il permet de surélever le module verrier afin de loger sous la platine le système d'éclairage sans risque de s'appuyer sur ce dernier.

L'association de l'élément porteur au profilé de montage est telle que l'élément porteur ne risque pas, bien qu'ayant un bord libre qui n'est pas nécessairement associé à la second aile du profilé, d'être mis en porte-à-faux ou de basculer lorsqu'il supporte le chant du vitrage.

En outre, l'amovibilité/la mobilité de l'une des ailes du profilé de montage inférieur ou supérieur et le fait que la platine ne soit pas solidaire (contre ou fixement) de cette aile, procure notamment les avantages suivants :
- un accès aisé sous la platine et de manière latérale pour agencer et/ou remplacer le système d'éclairage que ce soit les diodes et leur(s)PCB ou ces derniers et leur profilé d'accueil, sans avoir à retirer le module verrier si celui-ci est déjà en place ;
- facilite la mise en place du module de manière latérale sans avoir à le soulever pour l'agencer sur la platine, l'aile mobile ayant été préalablement écartée.

Par ailleurs, la platine est suffisamment large pour d'une part accueillir la totalité de la tranche du module verrier, et d'autre part chapoter le système d'éclairage afin que lors de l'installation du module, on évite tout choc du module contre le système d'éclairage, le bord externe de la platine (bord en regard de l'aile mobile lorsque celle-ci est en place) constituant une barrière de protection vis-à-vis du système d'éclairage. Si le module vient à buter contre une partie intérieure du profilé lors de l'installation, le choc interviendra avantageusement au niveau du bord externe de la platine sans risque d'endommagement du système d'éclairage.

En position montée de l'aile mobile, c'est-à-dire lorsque l'aile mobile est agencée perpendiculairement à l'âme du profilé et ferme latéralement la cavité du U, le bord externe de la platine en fonction de la largeur de la platine peut être abouté ou non à la face intérieure de l'aile mobile.

Selon une caractéristique, le bord libre ne comporte aucun retour en direction de l'âme du profilé de montage s'intercalant entre les diodes et la deuxième aile du profilé de montage ou aucun élément barrière n'est disposé entre les diodes et la seconde aile mobile.

L'élément porteur forme une pièce qui est rapportée par montage amovible ou par solidarisation, via un bord opposé au bord libre, dit bord de maintien, associé à la première aile du profilé de montage.

L'élément porteur forme une pièce usinée/profilée de manière unitaire avec la première aile du profilé de montage. En constituant une pièce rapportée, l'élément porteur peut ainsi être ajouté dans les profilés de montage déjà existants et usuels pour des cloisons actuelles éclairantes.

L'élément porteur est démontable de la cloison par exemple n'est pas fixé de manière permanente (ou intégré) au profilé de montage de la cloison.

La cloison comporte une surface de réception pour le(s) PCB ou le profilé d'accueil de(s) PCB, cette surface de réception pouvant être pour dans la position haute de la cloison, la platine (moyens de support) par sa face opposée au vitrage.

L'élément porteur constitue une pièce rapportée (avec les moyens de support (la platine) distincte du profilé de montage) et possède une forme générale au moins en L selon une vue en coupe transversale à son extension longitudinale, et comporte la surface (plane) de support agencée (horizontalement) parallèlement à l'âme du profilé et un flanc perpendiculaire (vertical) associé à la première aile du profilé de montage et/ou à l'âme, de préférence en butée, clipsé, monté en force. La forme en L n'est nullement limitative en particulier lorsque l'élément porteur n'est pas rapporté.

En variante, l'élément constitue une pièce rapportée (distincte du profilé de montage) et possède une forme générale en F selon une vue en coupe transversale à son extension longitudinale.

L'élément porteur comprend un épaulement agencé dans le prolongement du flanc et apte à coopérer par engagement mutuel avec la surface de la première aile, de préférence ladite surface présentant une cavité dans laquelle est coincé l'épaulement, de façon que l'élément porteur soit fermement maintenu en place dans le profilé de montage.

Le flanc et l'épaulement par leur face verticale externe opposée à la platine sont apposés contre la face intérieure de la première aile fixe du profilé, et maintenus par coopération avec ladite aile.

Le bord de la platine opposé au bord libre, le flanc et/ou l'épaulement l'élément porteur coopèrent avec la première aile du profilé par des moyens de solidarisation du type collage par exemple et/ou par des moyens d'engagement mutuel, tels que des cavités et portions en saillie.

Le système d'éclairage comprend des diodes électroluminescentes dont la face émettrice de lumière est disposée en regard de la tranche d'au moins un côté du module et est espacée de la tranche du module.

Le module verrier (notamment la feuille de verre) forme un guide de la lumière émise par les diodes et comprend des moyens d'extraction de la lumière ainsi guidée, pour un éclairage via au moins l'une des faces principales dudit module.

Les diodes sont agencées sur au moins un dispositif de support et d'alimentation électrique dit support PCB.

Un tel éclairage à base de diodes électroluminescentes (DEL ou LED en anglais) associé à la tranche du verre est un système à une basse consommation énergétique robuste dans le temps. Le profilé de montage cache les diodes et les protège.

La surface de réception intégrée au profilé de montage pour accueillir/installer le système d'éclairage peut présenter une base métallique, qui permet de dissiper la chaleur issue des PCB, assurant la longévité des diodes.

Les diodes sont indépendantes des modules verriers. Les modules utilisés sont des vitrages usuels sans qu'il ne soit besoin de pratiquer des trous dans la tranche du module verrier pour y disposer les diodes.

Avantageusement, les diodes sont du type « top emitting » en anglais et non « side emitting », c'est-à-dire qu'elles éclairent dans la direction opposée à leur dispositif de support et non latéralement. La face émettrice des diodes est parallèle à la tranche du module et de préférence à la surface de montage (plane).

Les diodes peuvent être encapsulées ou chapeautées de sorte à agencer au-dessus d'elles un système optique, du type lentille par exemple. Ce système optique ou tout simplement l'ensemble du système d'éclairage n'a nullement vocation à jouer le rôle de moyens de support pour le vitrage, la platine de l'élément porteur étant intercalée entre les diodes et le vitrage.

Selon une caractéristique, la platine comporte au moins un orifice ou une fenêtre pleine transparente, de préférence de géométrie oblongue et continue sur la quasi-totalité de la longueur de la platine. Cet orifice ou fenêtre permet, une fois le système d'éclairage en place dans le profilé de montage de laisser passer la lumière émis par le système d'éclairage à travers, le système d'éclairage étant disposé sous la platine. La platine en dehors de l'aire de l'orifice supporte la totalité du chant du vitrage.

Le(s) PCB ou le profilé d'accueil des PCB sont montés libre (posés sur la surface de réception) ou fixé provisoirement par des moyens d'amovibilité (retirables de préférence latéralement) par pivotement ou retrait de la seconde aile du profilé de montage.

Le ou les supports PCB avec les diodes peuvent être démontables seuls de la cloison sans être ainsi fixés de manière permanente au profilé de montage de la cloison. Les PCB sont positionnés, rapportés dans l'espace interne en U défini par le profilé de montage, en particulier rapportés contre une surface de réception, en y étant posés voire calés ou fixés par tout moyen amovible notamment de type vis ou par clipsage. De cette manière, les diodes sur support(s) PCB peuvent être installées/changées rapidement dans la cloison, fournissant un système d'éclairage à diodes, simple de fabrication et d'installation, et même remplacement.

Un ou des profilés d'accueil d'un ou de supports PCB avec les diodes peuvent être prévus pour accueillir les PCB. Le profilé d'accueil peut être démontable de la cloison sans être ainsi fixé de manière permanente au profilé de montage de la cloison. Les PCB sont positionnés, rapportés dans le profilé d'accueil en y étant posés voire calés ou fixés par tout moyen amovible notamment de type vis. Le profilé d'accueil est positionné, rapporté dans l'espace interne en U défini par le profilé de montage, en particulier rapporté contre une surface dite de réception, sous jacente aux moyens de support (platine) du vitrage pour le profilé inférieur. Le profilé d'accueil est posé voire calé ou fixé par tout moyen amovible notamment de type vis (dont le vissage est accessible par le coté dans un plan horizontal) ou par clipsage. De cette manière, le profilé d'accueil et les diodes sur support(s) PCB peuvent être installés/changés rapidement dans la cloison, fournissant un système d'éclairage à diodes simple de fabrication et d'installation, et même remplacement.

Le retrait des PCB et diodes, éventuellement d'un ou des profilés d'accueil logeant les PCB et diodes, se fait latéralement, de préférence par translation (sensiblement) horizontale. Le profilé de montage (son corps ou tout élément rapporté dans le volume intérieur) est conçu pour qu'aucun élément, notamment associé à la surface de réception sur laquelle repose le système d'éclairage, ne fasse obstacle à ce retrait latéral, selon un mouvement sensiblement horizontal dans la direction opposée à la première aile du profilé, la seconde aile du profilé ayant été préalablement retirée ou pivotée.

La fixation non permanente ou le calage (par exemple par un rail de guidage) des PCB ou des profilés d'accueil des PCB se fait par tous moyens connus, un collage non permament ou un vissage ne constituant cependant pas un mode de maintien préféré.

La partie basse ou haute, le profilé d'accueil logeant le(s) PCB à diodes est rapporté dans le profilé de montage ou, pour la partie basse, le profilé d'accueil fait partie intégrante du volume intérieur du profilé de montage, notamment de l'âme.

Le système d'éclairage à diodes peut être porté par un profilé d'accueil qui est mis en place dans le profilé de montage comme déjà indiqué. Si ce profilé d'accueil est amovible, il suffit que le profilé de montage ne présente aucun élément susceptible de gêner le retrait latéral du profilé d'accueil hors du profilé de montage. Si ce profilé d'accueil est solidaire du profilé de montage, sa forme est conçue pour qu'il ne présente aucun élément susceptible de gêner le retrait latéral du ou des PCB porteurs des diodes hors du profilé de montage, en particulier qu'il ne présente aucun retour vertical (grandement) supérieur à la hauteur des diodes.

La partie basse, elle comprend une surface de réception pour le(s) PCB ou le profilé d'accueil des PCB, cette surface de réception étant associée à l'élément porteur ou au profilé notamment à l'âme, et est disposée entre la platine et l'âme du profilé, notamment parallèle à la platine, à l'âme, voire au chant du vitrage, ladite surface de réception pouvant être pleine ou évidée, et/ou en deux parties.

L'association du profilé d'accueil ou bien du dispositif de support des diodes (PCB) en direct sur la surface de réception peut se faire de différentes manières ; elle se fait par exemple en étant posé directement sur la surface de réception, ou par des moyens de fixation amovible.

La cloison peut comprendre un logement notamment à deux parois avec des retours, le logement étant agencé entre la surface de réception et l'âme, le logement d'accueil, de préférence de forme parallélépipédique, étant destiné à recevoir des câbles électriques reliant différents systèmes d'éclairage de la cloison, la surface supérieure du logement d'accueil étant apte à constituer ladite surface de réception.

En outre, la platine de l'élément porteur (portant le vitrage en position basse) ne présente pas non plus d'élément susceptible de gêner le retrait latéral du système d'éclairage à diodes hors du profilé de montage, en particulier elle ne présente depuis son bord (libre) en regard de la seconde aile du profilé de montage, aucun retour vertical en direction de l'âme du profilé.

L'extrémité des diodes peut être située de manière extrêmement proche de la surface inférieure de support de l'élément porteur (par exemple de l'ordre du millimètre) ; ce qui importe est de pouvoir retirer aisément le PCB avec les diodes du logement situé sous l'élément porteur.

De préférence, les diodes comportant des puces semi-conductrices éventuellement recouvertes avec des moyens d'étanchéité à l'eau.

Le système d'éclairage, en particulier la surface supérieure des diodes, ne fait pas saillie par rapport aux moyens de support du chant du vitrage. Les diodes qui sont en regard des orifices des platines des éléments porteurs ne pénètrent pas dans lesdits orifices (dans l'épaisseur de la platine). Les diodes / le système d'éclairage sont agencés sous la platine de l'élément porteur, lui-même ne prenant pas du tout appui sur les diodes / le système d'éclairage.

La cloison comprend une seule rangée de diodes le long de la tranche du ou des modules, répartie longitudinalement en un ou plusieurs groupes de diodes sur support(s) PCB, ou dans le cas d'un ou de modules avec deux feuilles de verre espacées par une lame de gaz formant double vitrage, éventuellement deux rangées de diodes chacune en regard de la tranche de chaque feuille de verre.

La cloison peut comprendre au moins deux modules transparents aboutés l'un à l'autre de manière verticale et en ce qu'aucun système d'éclairage n'est agencé sur le côté vertical d'un module verrier abouté à l'autre module. Cette configuration permet de conserver une jonction bord à bord des modules qui est quasi-invisible ou formant un trait vertical lumineux.

La ou les feuilles de verre du module verrier sont à base d'un verre ayant une forte transmission lumineuse, d'au moins 85%, lorsque la mesure est effectuée sous illuminant D65 sur une feuille de verre à faces parallèles de 4 mm d'épaisseur.

Le verre des modules peut être trempé. Par ailleurs, les modules pourront présenter toutes sortes de propriétés usuelles pour les cloisons, telles que des propriétés acoustiques.

Le fond du profilé d'accueil ou de la surface de réception en contact avec le système d'éclairage est en un matériau conducteur thermique afin de dissiper la chaleur émise par en particulier par les diodes formant le système d'éclairage.

Dans une variante, l'espace séparant les diodes de l'élément porteur (de la surface support) pourrait comprendre, bien que la hauteur de séparation soit très faible, des parois latérales de guidage de la lumière. Ces parois pourraient par exemple être associées au profilé d'accueil du système d'éclairage, ce profilé d'accueil étant alors amovible dans son ensemble pour accéder aux PCB à diodes. Ces parois optimiseraient la redirection de la lumière émise par les diodes en direction du module

Le profilé de montage n'est de préférence nullement fixé directement aux faces principales du module, seuls des moyens d'étanchéité peuvent être associés à l'extrémité supérieure du profilé de montage entre les faces du module et les ailes du profilé. Les moyens d'étanchéité sont de préférence amovibles, notamment fixés par clipsage.

L'âme du profilé de montage, parallèle à la tranche du module, est de préférence trouée, notamment pour fixer ledit profilé de montage par vissage à la surface de montage avant installation du système d'éclairage et des modules.

Le profilé de montage inférieur de la cloison comprend au moins un module transparent, au moins deux éléments porteurs agencés aux extrémités distales respectives du module et en ne s'étendant que partiellement sur la longueur dudit module. A titre d'exemple, chacun des deux éléments porteurs présentent une longueur de 30 mm et une largeur de 20 m. Les éléments porteurs permettent de supporter un panneau de 45 kg de dimensions horizontale 1,10 m, et verticale 2,80 m. Concernant d'autres dimensions, la hauteur du profilé est par exemple de 35 mm.

Selon l'invention, la cloison en verre éclairante est notamment destinée à être associée (montée) entre une surface d'accueil inférieure (sol ou autre surface inférieure) et une surface d'accueil supérieure (plafond ou autre) et de préférence à tout le moins associée (posée voire fixée) à une surface inférieure.

La cloison éclairante de l'invention est destinée à tout type d'utilisation en extérieur et/ou intérieur, dans un bâtiment ou dans un véhicule (notamment de transport...) dans un espace public, telle qu'une séparation entre pièces, compartiment, une séparation à l'intérieur d'une même pièce, pour constituer une porte, une vitrine, un comptoir, un dispositif de décoration d'intérieur, un garde-corps, un produit d'ameublement, un luminaire sur pied en particulier à forme parallélépipédique, etc...

L'utilisation d'une telle cloison est notamment de fournir une paroi transparente et éclairante qui assure la séparation d'un espace ; la cloison permet de constituer une séparation physique éclairante délimitant de part et d'autre des zones d'occupation de l'espace. Il s'agit d'une application totalement éloignée d'un module éclairant pour écran de visualisation ou panneau éclairant similaire qui est destiné à être accroché à un mur, ou qui serait encapsulé dans un cadre porteur.

Par ailleurs, la cloison (la feuille de verre) est de préférence transparente, surtout hors de moyens d'extraction de la lumière qui lui seraient associés créant par exemple un caractère satiné, ou éventuellement la feuille de verre est dotée sur une face principale d'un revêtement semi réfléchissant, type miroir espion par exemple tel le produit commercialisé sons le nom Mirastar. On préfère en outre voir l'éclairage des deux côtés du module.

Le profilé de montage est de préférence dans un matériau qui assure de ne pas rendre visible de l'extérieur après montage, l'ensemble de la cavité interne, en particulier en rendant invisible le système d'éclairage et l'élément de support.

Il est à noter que le profilé de montage n'est pas forcément fixé au sol mais pourrait être fixé sur une autre surface d'accueil.

Par ailleurs la cloison n'est pas forcément fixe, elle peut être mobile par rapport à sa surface d'association (sol, plafond etc).

La hauteur de la cloison n'est pas forcément la hauteur entre le sol et le plafond (éventuel).

Enfin, l'invention propose un procédé de montage de la cloison (telle que décrite précédemment) entre une surface inférieure (un sol, un plancher, etc...) et une surface supérieure (plafond ou similaire), et dans lequel :
- on pose, voire on fixe, le profilé de montage inférieur au sol et le profilé de montage supérieur au plafond (de préférence par vis au travers de l'âme du profilé),
- on agence l'élément porteur (notamment la surface support) dans le profilé de montage inférieur, si celui-ci n'est pas déjà intégré (car ayant été préalablement rapporté ou faisant partie intégrante du corps du profilé), et éventuellement également dans le profilé de montage supérieur,
- quelle que soit la destination d'installation de la cloison, on pivote ou on détache la seconde aile mobile des profilés de montage supérieur et inférieur,
- on installe dans le ou les profilés de montage supérieur et/ou inférieur le système d'éclairage à diodes en le plaçant sur une surface de réception, de préférence on dispose les PCB et diodes dans un logement d'accueil (d'un profilé de d'accueil par exemple) notamment associé au profilé de montage,
- on pose éventuellement (si le sol n'est pas parfaitement plan) une ou des cales sur le ou les éléments porteurs (sur les moyens de support) du profilé de montage inférieur, la cale étant transparente,
- on pose le bord du chant inférieur (le bord le plus proche de l'installateur) du ou des modules verriers sur les moyens de support (la platine) du ou des éléments porteurs du profilé de montage inférieur,
- on bascule le ou les modules verriers dans une direction opposée à l'installateur, de sorte à amener la partie supérieure du ou des modules verriers dans le profilé de montage supérieur et à faire reposer la totalité du chant inférieur des modules sur la platine du ou des éléments porteurs,
- on remet en place la seconde aile mobile des profilés de montage inférieur et supérieur,
- on pose des moyens d'étanchéité en l'extrémité distale ouverte des profilés de montage inférieur et supérieur entre les ailes dudit profilé et le ou les modules,

La présente invention est maintenant décrite à l'aide d'exemples uniquement illustratifs et nullement limitatifs de la portée de l'invention, et à partir des illustrations ci-jointes, dans lesquelles :
- La figure 1 illustre schématiquement une vue en coupe et partielle de face d'une cloison éclairante en verre selon l'invention ;
- La figure 2 est une vue schématique en coupe transversale de la cloison en position montée d'un module verrier dans les profilés de montage respectivement inférieur et supérieur de l'invention ; par commodité, la hauteur de la cloison a été partiellement coupée pour ne pas visualiser toute la hauteur verrière ;
- La figure 3 est une variante de la figure 2 au regard du maintien des PCB du système d'éclairage pour le profilé inférieur, et en ayant retiré l'aile amovible du profilé de montage ;
- La figure 4a est une vue de dessous d'un élément porteur destiné à être intégré au profilé de montage pour supporter le poids d'un module verrier ;
- La figure 4b est une vue en coupe transversale de l'élément porteur de la figure 4a ;
- Les figure 5 et 6 sont des variantes de la figure 2 au regard de l'élément porteur pour le profilé inférieur ;
- La figure 7 est une autre variante encore de l'élément porteur pour le profilé inférieur et la fixation amovible de PCB ;
- La figure 8 est une vue schématique en coupe transversale du côté supérieur de la cloison en position montée d'un module verrier dans un profilé de montage supérieur selon une variante;

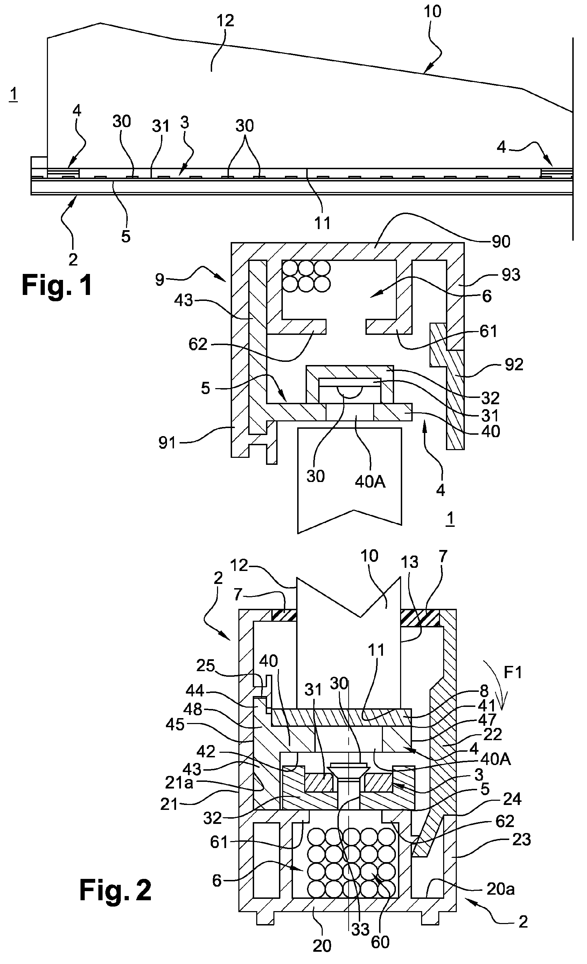

La figure 1 illustre schématiquement la partie inférieure et partielle d'une cloison 1 transparente et éclairante, en particulier en verre, installée au moyen d'au moins un profilé de montage 2 inférieur de l'invention.

La cloison est montée verticale, par exemple entre un sol et un plafond d'une pièce, (plancher et/ou toit d'un véhicule) en présentant une hauteur adaptée.

La cloison 1 comprend au moins un module 10 transparent, de préférence verrier, éventuellement plusieurs modules accolés selon un plan vertical dans une direction horizontale pour fournir la largeur idoine de la cloison.

On entend par « transparent » dans la description, de manière à assurer la transmission de lumière.

Le module verrier 10 est formé d'un verre monolithique ou d'un verre feuilleté doté d'au moins deux substrats en verre et d'un intercalaire en matière plastique, ou encore d'un vitrage isolant doté de deux substrats verriers espacés par une lame de gaz telle que de l'air.

Les substrats en verre sont de préférence faits d'un verre ayant une forte transmission lumineuse, d'au moins 85%, lorsque la mesure est effectuée sous illuminant D65 sur une feuille de verre à faces parallèles de 4 mm d'épaisseur. De préférence, il s'agira d'un verre dit extra-clair, tel que le verre DIAMANT® commercialisé par la société SAINT-GOBAIN GLASS.

Le module verrier peut présenter toutes fonctionnalités connues de l'homme de l'art, du type à propriétés isolantes thermiquement (couches fonctionnelles), acoustiques, de blindage, etc...

Les feuilles de verre pour un module feuilleté auront par exemple une épaisseur de 5, 6 ou 8 mm.

La feuille de verre pour un module monolithique sera de préférence trempée et aura de préférence une épaisseur de 10 ou 12 mm par exemple.

La cloison 1 fournit un éclairage procuré par au moins un module voire chacun des modules verriers.

La cloison 1 est éclairante et comprend un système d'éclairage 3 agencé en regard d'une ou des tranches 11 du module verrier.

De préférence, les diodes 30 du système d'éclairage 3 sont disposées en regard des tranches inférieure (telle qu'illustrée sur la figure 1) et supérieure du module, donc de la cloison, en position montée de la cloison et non contre les bords verticaux afin de ne pas modifier l'aspect esthétique de la cloison au niveau des jonctions d'aboutement entre modules.

La figure 2 illustre les profilés de montage inférieur 2 et supérieur 9 de la cloison. Le profilé de montage supérieur sera décrit ultérieurement.

Le système d'éclairage 3 est logé dans le profilé de montage inférieur 2 qui, selon l'invention, est adapté afin que d'une part le module verrier 10 ne repose pas directement sur ledit système d'éclairage, les diodes, évitant tout risque d'écrasement dû au poids du module, et d'autre part, les diodes sur PCB puissent être changées, par exemple en cas de défaillance, sans avoir à démonter l'ensemble de la cloison ou le module verrier en place.

Le système d'éclairage 3 est agencé de manière cachée pour un observateur regardant de face la cloison montée.

La cloison comprend des moyens de diffusion de la lumière associés à l'une des faces du verre pour un module monolithique (une seule feuille de verre), ou lorsque le module comprend au moins deux feuilles de verre (module feuilleté ou isolant de type double-vitrage), associés à l'une des faces internes de l'une des feuilles de verre.

Les moyens de diffusion sont de préférence sérigraphiés sur le verre et sont par exemple de l'émail. Ils s'étendent sur le verre selon un agencement et des motifs choisis. Ils ne recouvrent pas forcément la totalité de la surface du verre du module et peuvent ainsi délimiter des zones dites sombres fonctionnelles. Les zones sombres sont par exemple disposées de manière centrale ou périphérique au module. Elles consistent par exemple en des zones transparentes (clair de vitre) ou opaques, ou encore en des miroirs.

Le module 10 est éclairé par le système d'éclairage 3 en regard de la tranche 11 du module. La lumière issue des diodes 30 qui sont situées en regard de la tranche 11 du module, par exemple en regard du centre de la tranche, se propage dans l'épaisseur de verre (voire de l'intercalaire) dans une direction transversale aux plans formées par les faces principales 12 et 13 du module (figure 2) pour être redirigée grâce aux moyens de diffusion vers l'extérieur du module.

Pour un module monolithique, les diodes sont agencées en regard de la tranche de l'unique feuille de verre. Pour un module avec deux feuilles de verre espacées par une lame d'air, les diodes sont de préférence disposées en regard de chacune des tranches des feuilles de verre.

Comme exprimé plus haut, les diodes sont disposées en regard des côtés horizontaux supérieur et inférieur du module.

Les profilés de montage 2 et 9 de l'invention visible sur les figures 1 et 2 s'étendent longitudinalement aux côtés respectivement inférieur et supérieur du module verrier 10, et présente une forme de section générale en U en position d'utilisation.

Le profilé de montage 2, 9 est de préférence métallique, en aluminium ou en inox, mais peut être en matière plastique, en particulier composite.

Le profilé 2 (figure 2) présente un corps de type en U comprenant une âme 20 et deux ailes 21 et 22 perpendiculaires à l'âme et parallèles et espacées entre elles.

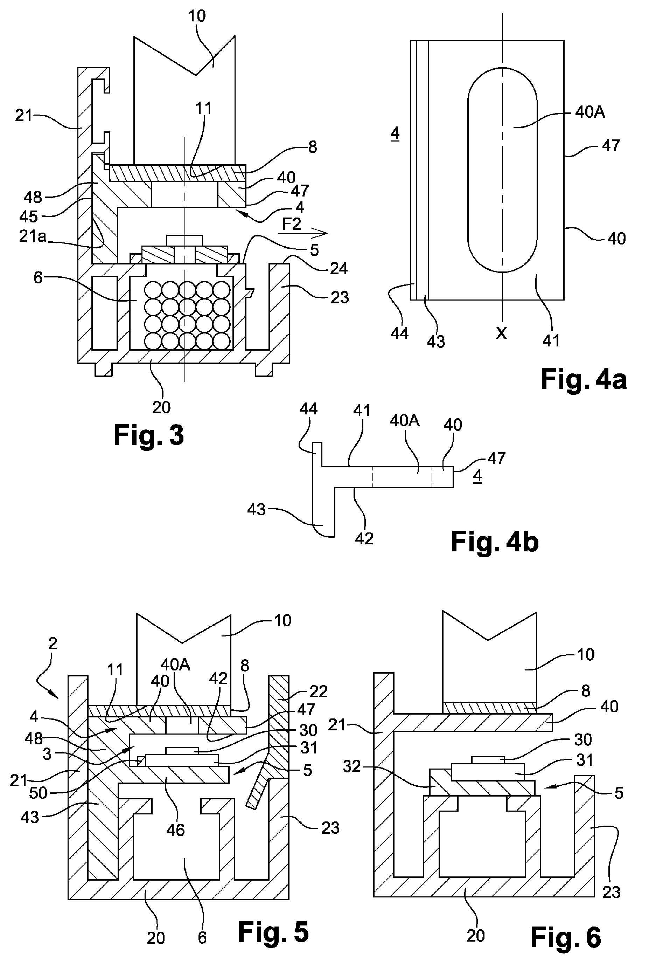

Selon l'invention, la seconde aile 22 du profilé de montage 2 est mobile ou amovible, procurant un accès à l'intérieur du profilé à tout moment, en particulier ultérieurement à l'installation de la cloison. Sur la figure 3 est illustré le profilé 2 sans sa seconde aile.

L'aile 22 peut être mobile ou amovible par rapport au point de jonction avec l'âme 20, ou bien tel qu'illustré sur les figures 2 et 3, au niveau de l'extrémité distale 24 d'une extension fixe 23 se projetant perpendiculairement depuis le bord longitudinal 20a de l'âme 20.

L'aile 22 est mobile en ce sens qu'elle pivote par rapport à un axe longitudinal qui suit le bord 24 de l'extension 23, et forme une charnière invisible esthétiquement de l'extérieur du profilé. Le pivotement de l'aile se fait en direction de l'extérieur du profilé 2, vers l'opposé de la première aile 21 (tel que selon la flèche F1 de la figure 2).

En variante et de manière préférée, la seconde aile 22 est amovible. Avantageusement, les moyens d'amovibilité sont constitués par des moyens de clipsage.

La première aile 21 du profilé de montage 2 est de préférence fixe et solidaire de l'âme 20.

La mobilité de la seconde aile 22 donne accès directement aux diodes du système d'éclairage, celui-ci étant retiré latéralement par translation selon la flèche F2 (figure 3).

Des moyens d'étanchéité 7 amovibles sont prévus en étant apposés contre le module 10 et les extrémités libres 21 a et 22a des ailes respectives 21 et 22 du profilé de montage. Ces moyens d'étanchéité sont par exemple fixés par clipsage.

Le profilé de montage 2 est destiné à être solidaire de la surface de fixation par des moyens de fixation non illustrés, tels que des vis qui traversent l'âme 20 et sont destinées à coopérer avec ladite surface de fixation. On préférera ne pas utiliser de vis auto-taraudeuses ; des orifices préalables seront prévus dans l'âme. Les vis seront réparties selon la longueur du profilé de montage.

Un profilé de montage 2 peut présenter une longueur équivalente à un module verrier ou à plusieurs modules verriers.

Selon l'invention et en regard des figures 1 à 3 et 5 et 6, le profilé de montage 2 comporte au moins un élément porteur sur lequel repose le module verrier 10 et une surface de réception 5 portant le système d'éclairage 3.

En outre, le profilé de montage 2 peut comprendre un logement 6 délimité par deux parois avec un retour vers l'intérieur du profilé et dans lequel cheminent des câbles d'alimentation 60 du système d'éclairage 3 disposé le long du profilé de montage.

D'une part, l'élément porteur 4 est apte à supporter le poids du module verrier sans fléchir, et d'autre part, il procure une entretoise entre la tranche inférieure 11 du module et l'extrémité supérieure du système d'éclairage 3 pour ne pas s'appuyer sur celui-ci.

En outre, l'élément porteur 4 agencé au-dessus du système d'éclairage et le chapotant, protège celui-ci des chocs lors de l'installation du module dans le profilé, que le module soit amené latéralement au système d'éclairage et/ou verticalement à celui-ci.

L'élément porteur 4 est détaillé en regard des figures 4a et 4b.

L'élément 4 s'étend selon un axe longitudinal X (figure 4a) qui est destiné à être parallèle à l'axe longitudinal du profil de montage 2, et présente transversalement à l'axe longitudinal une section générale de forme au moins en L (figure 4b).

L'élément porteur 4 comporte des moyens de support tels qu'une platine 40 et un flanc 43 perpendiculaire à ladite platine et connecté à l'un des bords de la surface 40.

La platine 40, dite par la suite platine, possède deux faces principales, une dite supérieure 41 qui est destinée à porter la tranche 11 du module verrier (figure 2), une opposée 42 dite inférieure, qui est en regard de l'âme 20 et du système d'éclairage 3.

Pour le profilé de montage inférieur 2 afin de rattraper des défauts de planéité du sol, la cloison est agencée de niveau grâce à une ou des cales 8. La cale est disposée sur les moyens de support ou platine 40 de l'élément porteur 5, le ou les vitrages reposant par leur tranche sur les cales. Les cales sont transparentes pour laisser passer la lumière émise des diodes. Les cales sont par exemple en polyméthacrylate de méthyle (PMMA) connu également sous le nom de Plexiglas®.

Le flanc 43 de l'élément porteur 4 permet l'intégration / l'association de ce dernier lorsque celui-ci est rapporté dans le profilé de montage.

De plus, le flanc 43 participe à la rigidité de l'élément porteur 4 lorsque celui-ci supporte le module verrier.

Le flanc 43 s'étend depuis la platine 40 de préférence en direction de l'âme 20 du profilé (figure 2).

De préférence, la platine 40 et le flanc 43 forme un ensemble monobloc.

Avantageusement, pour confirmer le maintien en position de l'élément porteur 4 dans le profilé de montage 2, ledit élément comprend un épaulement 44 agencé dans le prolongement du flanc 43 et relié au bord de la platine 40.

En regard des figures 2 et 3, l'élément porteur 4 est rendu solidaire de l'intérieur du profilé de montage 2 de sorte que le flanc 43 et l'épaulement 44 par leur face verticale externe 45 opposée à la platine 40 sont apposés contre la face intérieure 21a de la première aile fixe 21 du profilé, et maintenus par coopération avec ladite aile 21.

La retenue de l'élément porteur 4 est assurée par la coopération de l'extrémité 48 de la platine 4, du flanc 43 et/ou de l'épaulement 44 avec l'aile 21 du profilé. Cette coopération peut être réalisée par des moyens de solidarisation du type collage par exemple et/ou par des moyens d'engagement mutuel entre le corps du profilé (l'aile 21) et l'élément porteur 4, tels que des cavités et portions en saillie.

L'exemple ici illustré montre un engagement de l'épaulement 44 dans une cavité d'accueil 25 agencée dans la paroi de l'aile 21 du profilé 2. Ainsi, lorsque le module est installé, la platine 40 ne risque pas de basculer car retenue par l'épaulement 44 coincé dans la cavité 25.

En variante, l'élément porteur 4 peut ne pas former une pièce indépendante et rapportée mais faire partie intégrante du corps du profilé en sortie de fabrication dudit profilé, l'élément porteur et le corps du profilé ne formant qu'un seul ensemble unitaire. Dans ce cas, le flanc 43 correspond à une partie de l'aile fixe 21 du profilé, l'élément porteur étant limité à la platine 40 (figure 6).

L'élément porteur 4 est de préférence métallique lorsqu'il s'agit d'une pièce rapportée. Il pourrait être en matière plastique notamment en matière composite avec fibres de renforcement lorsqu'il est intégré au corps du profilé si ce dernier est obtenu par exemple par extrusion.

L'épaisseur de la platine 40 (dimension transversale aux faces principales de la platine) est par exemple de l'ordre de 3 à 5 mm.

L'ensemble du flanc 43 et de l'épaulement 44 présentent une hauteur (dimension perpendiculaire à la platine 40) de l'ordre de 10 à 15 mm.

Tel qu'exprimé plus haut, la largeur de la platine 40, et de la cale, est dimensionnée pour supporter la totalité de la tranche d'un module. Elle est par exemple de l'ordre de 20 mm.

La platine 40 présente en position associée au profilé de montage, un bord libre 47 à l'opposé du flanc 43 et de l'épaulement 44. Ce bord libre peut ou pas être abouté à l'aile mobile 22.

Selon l'invention, le bord libre 47 n'est pas relié fixement à l'aile mobile 22 et ne comprend aucun retour en direction de l'âme 20 du profilé, ce qui permet un accès latéral à la cavité du profilé, et aux diodes lorsque l'aile mobile est détachée ou ouverte (position non perpendiculaire à l'âme) et ainsi assure de disposer ou de remplacement aisément le système d'éclairage 3 situé sous la platine 40.

De préférence, selon l'invention, le profilé de montage 2 comprend une pluralité ou au moins deux éléments porteurs 4 qui sont limités en longueur (dimension selon l'axe X et parallèle à l'axe longitudinal du profilé de montage). La longueur d'un élément est par exemple de l'ordre de 30 mm.

Deux éléments porteurs 4 agencés aux deux extrémités respectives du module verrier 10 suffisent à supporter son poids, un module par exemple de 3 m² possédant un poids de l'ordre de 90 kg, avec une répartition de 45 kg par platine.

Bien entendu, un élément porteur seul pourrait être utilisé en présentant une longueur appropriée pour s'étendre selon une grande partie, voire la totalité, de la longueur du module. Toutefois, pour une raison d'économie de matière, cette solution n'est pas préférée.

Selon l'invention, la platine 40 comporte au moins un orifice 40A de passage pour la lumière du système d'éclairage placé sous la platine (si celle-ci est notamment opaque). Cet orifice est de forme notamment oblongue s'étendant selon l'axe X. Cet orifice possède par exemple une largeur de 8 mm.

En fonction du type du système d'éclairage 3 et de la longueur de l'élément porteur 4, un orifice continu ou plusieurs orifices pourront être prévus. Pour des diodes par exemple, un orifice peut être ménagé au droit de chaque diode ; cette variante n'est cependant pas préférée.

Il est plus commode et pour optimiser la transmission de la lumière de ménager des orifices dans la platine. Toutefois, il peut être envisagé de concevoir une platine dont la surface au regard du système d'éclairage soit pleine et transparente sans nécessiter de trous.

Selon l'invention, le profilé de montage inférieur 2 comporte une surface de réception 5 pour le système d'éclairage qui est distincte de la platine 40 puisque disposée sous et à distance de la platine 40.

Cette surface de réception 5 peut être constituée directement de la face intérieure de l'âme 20 du profilé. Cependant, de manière à permettre le cheminement de câbles dans le fond du profilé, la surface de réception 5 constitue une surface distincte de l'âme 20 du profilé.

La surface de réception 5 peut être monobloc avec le corps du profilé de montage 2.

En regard des figures 2, 3 et 6, la surface de réception 5 peut être formée par exemple de deux retours supérieurs 61 et 62 des parois du logement 6 des câbles.

Lorsque l'aile mobile 22 est connectée à l'extension fixe 23 du profilé, afin de pouvoir dégager latéralement les diodes hors du profilé, la surface de réception 5 est positionnée au moins à hauteur de l'extrémité distale 24 de l'extension fixe 23.

La surface de réception 5 peut faire partie de l'élément porteur 4, tel qu'illustré sur la figure 5. L'élément porteur 4, de forme générale en F, comprend un plateau inférieur 46 relié perpendiculairement au flanc 43 (à l'opposé de l'épaulement 44) et parallèle et à distance de la platine 40. L'espacement entre la face 42 de la platine 40 et le plateau 46 est adapté pour loger le système d'éclairage 3 et le retirer si nécessaire.

Le système d'éclairage 3 est formé d'une pluralité de diodes électroluminescentes 30 (DEL) agencées de manière connue sur un ou plusieurs dispositifs de support et d'alimentation électrique 31, qui sont typiquement des cartes de circuit imprimé (PCB pour « Printed Circuit Board » en anglais). Un vernis isolant électrique est prévu sur les connexions des diodes.

Les diodes 30 (comme leur support PCB) ne sont pas noyées dans de la résine d'étanchéification évitant une épaisseur trop imposante de celles-ci et leur support. Avantageusement, les diodes comportent une puce semi-conductrice combinée à une résine optique (luminophore) et éventuellement une couche étanche, en particulier déposée par pistolet, qui couvre les diodes et la surface du support.

La largeur du dispositif de support PCB 31 est par exemple inférieure ou égale à la largeur de la tranche du module voire d'une feuille de verre.

A titre d'exemple, les éléments présentent les dimensions suivantes :
- Largeur du PCB : 10 mm ou 5 mm,
- Epaisseur de PCB : 2 mm,
- Hauteur des diodes : 2 mm.

Les dispositifs de support et d'alimentation ou PCB 31 sont montés directement sur la surface de réception 5 (figure 5) ou bien dans un profilé d'accueil 32 (figure 2) agencé sur la surface de réception 5. Les PCB sont reliés électriquement à une connexion électrique centralisée non illustrée.

Le montage des dispositifs PCB avec les diodes au profilé d'accueil 32 peut se faire en usine, les profilés 32 étant livrés pour le montage de la cloison en intégrant déjà le ou les PCB avec les diodes. L'insertion du ou des PCB avec les diodes peut également se faire lors du montage de la cloison, en rapportant les diodes via leurs PCB 31 dans les profilés d'accueil 32.

Plusieurs dispositifs 31 peuvent être agencés de manière adjacente entre eux le long du profilé d'accueil 32.

En regard de la figure 2, les PCB peuvent être fixés au profilé d'accueil par des vis de fixation 33.

L'association du profilé d'accueil 32 ou bien du PCB 31 en direct sur la surface de réception 5 peut se faire de différentes manières, par exemple en étant simplement posé, ou par des moyens de fixation amovible (même avec un simple accès latéral), ou encore par des moyens de calage amovible ou non tels qu'une pluralité de plots 50 au moins disposés latéralement selon un axe longitudinal du côté de la première aile 21 espacés de la largeur du PCB (figure 5).

Dans une autre variante (figure 6), le profilé d'accueil 32 fait partie intégrante du profilé de montage, par exemple usiné dans la matière constitutive du profilé de montage.

L'association est telle que la translation latérale du profilé d'accueil 32 ou du dispositif de support PCB 31 hors de la surface de réception et vers l'extérieur du profilé, puisse se faire aisément sans élément barrière fixe entre l'aile 22 et les diodes.

Le profilé d'accueil 32 présente une forme générale avec cavité, du type à section en U pour loger de manière calée les PCB 31. Pour le profilé de montage inférieur, le profilé d'accueil présente de préférence un retour vertical du côté de l'aile mobile qui ne dépasse pas l'extrémité supérieure des diodes.

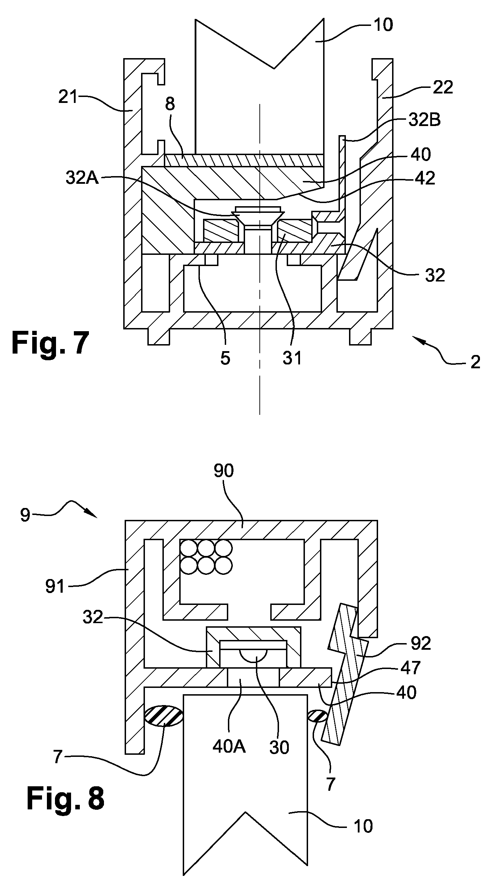

Dans une autre variante encore (figure 7), le PCB 31 est fixé de manière amovible par une vis 32A dans un profilé d'accueil 32. Le profilé d'accueil 32 repose sur la surface de réception 5. Le profilé d'accueil 32 comporte une languette verticale 32B de préhension permettant lorsque l'aile mobile 22 est retirée d'accéder aisément aux diodes. En outre, pour faciliter l'accès, la face inférieure 42 de la platine 40 peut être biseautée.

Encore dans une autre variante non illustrée, le profilé d'accueil 32 logeant les PCB pourrait être, non pas simplement posé mais maintenu de manière amovible dans le profilé de montage, par exemple par un vissage latéral horizontal dans le corps du profilé.

Avantageusement, des moyens de dissipation de la chaleur sont prévus sous la surface des dispositifs de support 31 (PCB), de manière solidaire ou non. Cela permet de dissiper la chaleur émise par les diodes 30 au niveau de leur connexion aux PCB 31. De préférence, la base porteuse du ou des supports PCB (eux-mêmes métalliques ou non) forment ces moyens de dissipation de la chaleur, la base porteuse étant formée par le profilé d'accueil 32 et/ou la surface de réception5.

Sur la figure 2 est illustré le profilé de montage supérieur 9. Avantageusement, le profilé de montage supérieur 9 est similaire à celui inférieur 2 et comprend une aile mobile ici détachée et non illustrée et un élément porteur 4. Toutefois, l'élément porteur 4 ne joue plus le rôle de support du poids du module. L'élément porteur 4 constitue une barrière entre les diodes et le vitrage afin de protéger les diodes lors de l'installation du vitrage. En outre, il permet de supporter les diodes et leur PCB et leur profilé d'accueil 32, la platine 40 étant ainsi suffisamment rigide pour le poids de l'ensemble profilé d'accueil 32 et PCB 31 portant les diodes. Cela permet aussi d'installer les PCB dans leur profilé d'accueil avant le placement du vitrage.

Le profilé de montage supérieur 9 comporte avantageusement :
- un corps similaire au profilé inférieur, en comprenant une forme en U (dont l'ouverture est tournée vers le bas) avec une âme 90, une première aile 91 et une seconde aile 92 qui est mobile afin d'avoir aisément accès à la cavité du U pour y installer/remplacer le système d'éclairage 3 ;
- une surface de réception 5 pour le système d'éclairage ;
- de préférence un logement 6 pour le passage de câbles ;
- la platine 40 de l'élément porteur 4 est parallèle et à l'opposé de l'âme 80.

Le système d'éclairage 3 du profilé de montage supérieur 9 comporte de préférence des diodes 30 fixées à leur PCB 31, l'ensemble étant porté par un profilé d'accueil 32. Le profilé d'accueil 32 est posé sur la surface de réception 5, constituée ici par la face 42 de la platine 40 en regard de l'âme.

La platine 40 sert à protéger les diodes 30 des chocs lors de l'installation du module 10 et permet leur installation simple avant placement du module

Dans la variante illustrée sur la figure 8, la platine 40 formant la surface de réception 5, fait partie intégrante du profilé de montage 9, en particulier de la première aile 91.

La platine 40 comporte un orifice 40A ou une fenêtre à surface pleine transparente agencée en regard des diodes 30 pour le passage de la lumière.

En position installée du vitrage 10, un espace de l'ordre du millimètre sépare la platine 40 du vitrage.

Le montage d'une cloison de l'invention est réalisé de la manière suivante en regard de la cloison de la figure 2.

Lorsque les éléments porteur 4 sont rapportés dans les profilés de montage inférieur 2 et supérieur 9, ceux-ci sont mis en place dans les profilés de montage respectifs inférieur 2 et supérieur 9, l'aile mobile 22, respectivement 92 étant en position pivotée ou bien est détachée.

Les profilés de montage inférieur 2 et supérieur 9 sont fixés respectivement au sol et au plafond, leur ouverture étant en regard l'une vers l'autre.

Des cales transparentes 8 sont éventuellement disposées sur la platine 40 des éléments porteurs 4 du profilé de montage inférieur.

Le système d'éclairage 3 est disposé sur la surface de réception 5.

Le module verrier est ensuite positionné face aux profilés de montage et maintenu incliné en disposant le bord de son chant inférieur sur les éléments porteurs 4 du profilé de montage inférieur (ou sur les cales 8 si celles-ci sont nécessaires), ledit profilé présentant son aile mobile 22 dégagée.

Puis, on bascule vers l'opposé de soi le module 10 en direction des premières ailes 31, 91 des profilés inférieur et supérieur. Le module est en place à la verticale.

Les ailes 22 des profilés de montage supérieur et inférieur sont remises en place.

Des moyens d'étanchéité 7 sont disposés dans les interstices séparant le module des extrémités libres des ailes 21 et 22, respectivement 91, 92, des profilés de montage 2, 9.

Bien entendu, d'autres variantes peuvent être imaginées sans sortir du cadre de l'invention. Les variantes exposées ci-dessus relatives à des éléments d'un mode de réalisation peuvent être repris avantageusement dans un autre mode de réalisation, en particulier concernant :
- la longueur de l'aile 22,
- le logement 6 de cheminement des câbles,
- le type de surface de réception 5,
- l'utilisation d'un profilé d'accueil 32 pour les PCB,
- la forme du profilé d'accueil 32,
- la forme de l'élément porteur 4
- la fixation de l'élément porteur 4 lorsque celui-ci est rapporté dans le profilé de montage,
- la face inférieure biseautée 42 de la platine 40.

## Revendications

1. Cloison éclairante (1) comprenant
- au moins un module verrier ou vitrage (10),
- des diodes (30) disposées sur au moins un dispositif de support (31) du type PCB, le ou les PCB étant éventuellement sur ou logés dans un profilé d'accueil (32), les diodes étant disposés en regard du chant (11) du vitrage,
- au moins un profilé de montage inférieur (2) et un profilé de montage supérieur (9), chaque profilé de montage comportant une âme (20, 90), une première aile (21, 91) perpendiculaire à l'âme, et une seconde aile (22, 92) perpendiculaire à l'âme, parallèle et espacée de la première aile, et le profilé de montage délimitant un volume intérieur,
**caractérisée en ce que**
- la cloison comprend au moins un élément porteur (4) distinct de tout élément accueillant les diodes, notamment distinct des PCB ou du profilé d'accueil des PCB, ledit élément porteur étant agencé dans le volume intérieur du profilé de montage inférieur (2) et/ou supérieur (9), et comprenant des moyens de support (40) tels qu'une platine qui est à distance de l'âme (20) du profilé de montage et située entre le chant du vitrage et les diodes,
- la platine (40) de l'élément porteur (4) est associée à la première aile (21, 91) du profilé et présente un bord libre (47) en regard de la seconde aile (22, 92) du profilé,
- en position basse de la cloison, la platine (40) supporte le vitrage directement ou via une éventuelle cale transparente (8) sus jacente,
- et/ou en position haute, le(s) PCB (31) et/ou le profilé d'accueil (32) du ou des PCB sont posés sur la platine (40),
- le(s) PCB avec les diodes sont dissociable(s) de la cloison,
- la seconde aile (22, 92) des profilés inférieur (2) et supérieur (9) est mobile ou amovible.

2. Cloison selon la revendication 1, **caractérisée en ce que** le bord libre (47) ne comporte aucun retour en direction de l'âme (20) du profilé de montage s'intercalant entre les diodes et la deuxième aile du profilé de montage, ou aucun élément barrière n'est disposé entre les diodes et la seconde aile (22, 92) mobile.

3. Cloison selon la revendication 1 ou 2, **caractérisé en ce que** l'élément porteur (4) forme une pièce qui est rapportée par montage amovible ou par solidarisation, via un bord opposé au bord libre, dit bord de maintien, associé à la première aile du profilé de montage.

4. Cloison selon l'une des revendications précédentes, **caractérisée en ce que** l'élément porteur (4) forme une pièce usinée/profilée de manière unitaire avec la première aile du profilé de montage.

5. Cloison selon l'une des revendications précédentes, **caractérisée en ce qu'**elle comporte une surface de réception (5) pour le(s) PCB ou le profilé d'accueil (32) de(s) PCB, cette surface de réception pouvant être pour dans la position haute, la platine (4) par sa face opposée (42) au vitrage.

6. Cloison selon l'une des revendications précédentes, **caractérisée en ce que** l'élément porteur (4) constitue une pièce rapportée et possède une forme générale au moins en L selon une vue en coupe transversale à son extension longitudinale, et comporte la surface de support (40) agencée parallèlement à l'âme (20) du profilé et un flanc perpendiculaire (43) associé à la première aile (21) du profilé de montage et/ou à l'âme, de préférence en butée, clipsé, monté en force.

7. Cloison selon l'une des revendications 1 à 5, **caractérisée en ce que** l'élément porteur (4) constitue une pièce rapportée et possède une forme générale en F selon une vue en coupe transversale à son extension longitudinale.

8. Cloison selon la revendication précédente, **caractérisée en ce que** l'élément porteur (4) comprend un épaulement (44) agencé dans le prolongement du flanc (43) et apte à coopérer par engagement mutuel avec la surface de la première aile (21), de préférence ladite surface présentant une cavité (25) dans laquelle est coincé l'épaulement.

9. Cloison selon la revendication précédente, **caractérisée en ce que** le flanc (43) et l'épaulement (44) par leur face verticale externe (45) opposée à la platine (40) sont apposés contre la face intérieure (21 a) de la première aile fixe (21) du profilé, et maintenus par coopération avec ladite aile.

10. Cloison selon la revendication 8 ou 9, **caractérisée en ce que** le bord (48) de la platine opposé au bord libre (47), le flanc (43) et/ou l'épaulement (44) l'élément porteur (4) coopèrent avec la première aile (21) du profilé par des moyens de solidarisation du type collage par exemple et/ou par des moyens d'engagement mutuel, tels que des cavités et portions en saillie.

11. Cloison selon l'une quelconque des revendications précédentes, **caractérisée en ce que** la platine (40) comporte au moins un orifice (45) ou une fenêtre pleine transparente, de préférence de géométrie oblongue et continue sur la quasi-totalité de la longueur de la platine.

12. Cloison selon l'une des revendications précédentes, **caractérisée en ce que** le(s) PCB ou le profilé d'accueil (32) des PCB sont montés libre ou fixé provisoirement par des moyens d'amovibilité par pivotement ou retrait de la seconde aile du profilé de montage.

13. Cloison selon l'une quelconque des revendications précédentes, **caractérisé en ce que** pour la partie basse ou haute, le profilé d'accueil (32) logeant le(s) PCB à diodes est rapporté dans le profilé de montage ou, pour la partie basse, le profilé d'accueil (32) fait partie intégrante du volume intérieur du profilé de montage, notamment de l'âme.

14. Cloison selon l'une quelconque des revendications précédentes, **caractérisée en ce que** pour la partie basse, elle comprend une surface de réception (5) pour le(s) PCB (31) ou le profilé d'accueil (32) des PCB, cette surface de réception étant associée à l'élément porteur (4) ou au profilé notamment à l'âme, et est disposée entre la platine (40) et l'âme (20) du profilé, ladite surface de réception pouvant être pleine ou évidée, et/ou en deux parties (61, 62).

15. Cloison selon la revendication 5 ou 14, **caractérisé en ce qu'**elle comprend un logement (6) notamment à deux parois avec des retours (61, 62), le logement étant agencé entre la surface de réception (5) et l'âme (20), la surface supérieure du logement d'accueil étant apte à constituer ladite surface de réception (5).

16. Cloison selon la revendication précédente, caractérisée en ce l'association du profilé d'accueil (32) ou bien du PCB (31) se fait en étant posé directement sur la surface de réception (5), ou par des moyens de fixation amovible.

17. Cloison selon l'une quelconque des revendications précédentes, **caractérisée en ce qu'**elle comprend au moins deux modules transparents aboutés l'un à l'autre de manière verticale et **en ce qu'**aucun système d'éclairage n'est agencé sur le côté vertical d'un module verrier abouté à l'autre module.

18. Cloison selon l'une quelconque des revendications précédentes, **caractérisée en ce que** le profilé de montage inférieur (2) de la cloison comprend au moins un module transparent (10), au moins deux éléments porteurs (4) agencés aux extrémités distales respectives du module et en ne s'étendant que partiellement sur la longueur dudit module.

## Patentansprüche

1. Leuchtende Trennwand (1), umfassend:
- mindestens ein Glasmodul oder eine Verglasung (10),
- Dioden (30), die auf mindestens einer Trägervorrichtung (31) des PCB-Typs vorgesehen sind, wobei das oder die PCB gegebenenfalls auf einem oder in einem Aufnahmeprofil (32) aufgenommen sind, wobei die Dioden der Kante (11) der Verglasung zugewandt vorgesehen sind,
- mindestens ein unteres Montageprofil (2) und ein oberes Montageprofil (9), wobei jedes Montageprofil einen Kern (20, 90), einen ersten Schenkel (21, 91), der zu dem Kern senkrecht ist, und einen zweiten Schenkel (22, 92), der zu dem Kern senkrecht ist und zu dem ersten Schenkel parallel und davon beabstandet ist, aufweist
und wobei das Montageprofil einen inneren Raum begrenzt, **dadurch gekennzeichnet, dass**
- die Trennwand mindestens ein Trageelement (4) umfasst, das von jeglichem Element zur Aufnahme der Dioden, insbesondere von den PCB oder von dem Profil zur Aufnahme der PCB, verschieden ist, wobei das Trageelement in dem inneren Raum des unteren Montageprofils (2) und/oder oberen Montageprofils (9) vorgesehen ist, und Trägermittel (40) wie eine Platte umfasst, die zu dem Kern (20) des Montageprofils beabstandet ist und sich zwischen der Kante der Verglasung und den Dioden befindet,
- die Platte (40) des Trageelements (4) mit dem ersten Schenkel (21, 91) des Profils verbunden ist und einen freien Rand (47) aufweist, der dem zweiten Schenkel (22, 92) des Profils zugewandt ist,
- in der unteren Position der Trennwand die Platte (40) die Verglasung direkt oder über einen etwaigen darüberliegenden transparenten Keil (8) trägt,
- und/oder in der oberen Position das bzw. die PCB (31) und/oder das Profil zur Aufnahme (32) des oder der PCB auf der Platte (40) angeordnet sind,
- das bzw. die PCB mit den Dioden von der Trennwand trennbar sind,
- der zweite Schenkel (22, 92) des unteren Profils (2) und oberen Profils (8) beweglich oder lösbar ist.

2. Trennwand nach Anspruch 1, **dadurch gekennzeichnet, dass** der freie Rand (47) keinen Rücklauf in Richtung des Kerns (20) des Montageprofils aufweist, der sich zwischen den Dioden und dem zweiten Schenkel des Montageprofis befindet, oder kein Sperrelement zwischen den Dioden und dem zweiten beweglichen Schenkel (22, 92) angeordnet ist.

3. Trennwand nach Anspruch 1 oder 2, **dadurch gekennzeichnet, dass** das Trageelement (4) ein Teil bildet, das durch lösbare Montage oder durch Verbindung über einen Rand, der dem freien Rand gegenüberliegt, dem so genannten Halterand, der mit dem ersten Schenkel des Montageprofils verbunden ist, angebracht ist.

4. Trennwand nach einem der vorhergehenden Ansprüche, **dadurch gekennzeichnet, dass** das Trageelement (4) ein Teil bildet, das einstückig mit dem ersten Schenkel des Montageprofils spanend bearbeitet/profiliert ist.

5. Trennwand nach einem der vorhergehenden Ansprüche, **dadurch gekennzeichnet, dass** sie eine Aufnahmefläche (5) für das bzw. die PCB oder das Profil zur Aufnahme (32) des oder der PCB aufweist, wobei diese Aufnahmefläche für in der oberen Position sein kann, die Platte (4) durch ihre Fläche (42), die der Verglasung gegenüberliegt.

6. Trennwand nach einem der vorhergehenden Ansprüche, **dadurch gekennzeichnet, dass** das Trageelement (4) ein angebrachtes Teil bildet und, im Querschnitt zu seiner Längsausdehnung gesehen, mindestens eine allgemeine L-Form aufweist und die Tragefläche (40), die parallel zu dem Kern (20) des Profils vorgesehen ist, und eine senkrechte Flanke (43) aufweist, die mit dem ersten Schenkel (21) des Montageprofils und/oder mit dem Kern verbunden ist, vorzugsweise in Anschlag, eingerastet, pressgepasst.

7. Trennwand nach einem der Ansprüche 1 bis 5, **dadurch gekennzeichnet, dass** das Trageelement (4) ein angebrachtes Teil bildet und, im Querschnitt zu seiner Längsausdehnung gesehen, eine allgemeine F-Form aufweist.

8. Trennwand nach dem vorhergehenden Anspruch, **dadurch gekennzeichnet, dass** das Trageelement (4) einen Absatz (44) umfasst, der in der Verlängerung der Flanke (43) vorgesehen ist und für das Zusammenwirken durch gegenseitigen Eingriff mit der Fläche des ersten Schenkels (21) eingerichtet ist, wobei die Fläche vorzugsweise eine Vertiefung (25) aufweist, in welcher der Absatz festgeklemmt ist.

9. Trennwand nach dem vorhergehenden Anspruch, **dadurch gekennzeichnet, dass** die Flanke (43) und der Absatz (44) über ihre vertikale, der Platte (40) gegenüberliegende Außenseite (45) gegen die Innenfläche (21a) des ersten festen Schenkels (21) des Profils anliegen und durch Zusammenwirken mit dem Schenkel gehalten werden.

10. Trennwand nach Anspruch 8 oder 9, **dadurch gekennzeichnet, dass** der dem freien Rand (47) gegenüberliegende Rand (48) der Platte, die Flanke (43) und/oder der Absatz (44) des Trageelements (4) mit dem ersten Schenkel (21) des Profils über Verbindungsmittel des Verklebungstyps zum Beispiel und/oder durch gegenseitige Eingriffsmittel, wie Vertiefungen und vorspringende Abschnitte, zusammenwirken.

11. Trennwand nach einem der vorhergehenden Ansprüche, **dadurch gekennzeichnet, dass** die Platte (40) mindestens eine Öffnung (45) oder ein massives transparentes Fenster aufweist, vorzugsweise mit einer langgezogenen und über die gesamte Länge der Platte fast durchgängigen Geometrie.

12. Trennwand nach einem der vorhergehenden Ansprüche, **dadurch gekennzeichnet, dass** das bzw. die PCB oder das Profil zur Aufnahme (32) der PCB frei gelagert sind oder behelfsmäßig über Mittel zum Lösen durch Schwenken oder Rückziehen des zweiten Schenkels des Montageprofils fixiert sind.

13. Trennwand nach einem der vorhergehenden Ansprüche, **dadurch gekennzeichnet, dass** für den unteren oder oberen Teil das Aufnahmeprofil (32), welches das bzw. die PCB mit Dioden aufnimmt, in dem Montageprofil angebracht ist, oder für den unteren Teil das Aufnahmeprofil (32) integraler Bestandteil des inneren Raums des Montageprofils ist, insbesondere des Kerns.

14. Trennwand nach einem der vorhergehenden Ansprüche, **dadurch gekennzeichnet, dass** sie für den unteren Teil einen Aufnahmefläche (5) für das bzw. die PCB (31) oder das Profil zur Aufnahme (32) der PCB aufweist, wobei diese Aufnahmefläche mit dem Trageelement (4) oder dem Profil, insbesondere dem Kern, verbunden ist und zwischen der Platte (40) und dem Kern (20) des Profils angeordnet ist, wobei die Aufnahmefläche massiv oder ausgespart und/oder aus zwei Teilen (61, 62) sein kann.

15. Trennwand nach Anspruch 5 oder 14, **dadurch gekennzeichnet, dass** sie einen Sitz (6) insbesondere mit zwei Wänden mit Rückläufen (61, 62) umfasst, wobei der Sitz zwischen der Aufnahmefläche (5) und dem Kern (20) vorgesehen ist, wobei die obere Fläche des Aufnahmesitzes eingerichtet ist, um die Aufnahmefläche (5) zu bilden.

16. Trennwand nach dem vorhergehenden Anspruch, **dadurch gekennzeichnet, dass** die Verbindung des Aufnahmeprofils (32) oder des PCB (31) erfolgt, indem es direkt auf der Aufnahmefläche (5) angeordnet wird, oder über Mittel zur lösbaren Verbindung.

17. Trennwand nach einem der vorhergehenden Ansprüche, **dadurch gekennzeichnet, dass** sie mindestens zwei transparente Module umfasst, die vertikal aneinander anschließen, und dass kein Beleuchtungssystem auf der vertikalen Seite eines Glasmoduls, das sich an das andere Modul anschließt, vorgesehen ist.

18. Trennwand nach einem der vorhergehenden Ansprüche, **dadurch gekennzeichnet, dass** das untere Montageprofil (2) der Trennwand mindestens ein transparentes Modul (10), mindestens zwei Trageelemente (4) umfasst, die an den jeweiligen distalen Enden des Moduls und sich nur teilweise über die Länge des Moduls erstreckend vorgesehen sind.

## Claims

1. An illuminating partition (1) comprising
- at least one glass module or glazing unit (10),
- diodes (30) disposed on at least one support device (31) of the PCB type, the PCB or PCBs potentially being on or accommodated in a receiving profiled member (32), the diodes being disposed facing the edge face (11) of the glazing unit,
- at least one lower mounting profiled member (2) and one upper mounting profiled member (9), each mounting profiled member comprising a central section (20, 90), a first lateral section (21, 91) perpendicular to the central section, and a second lateral section (22, 92) perpendicular to the central section, parallel to and spaced from the first lateral section, and the mounting profiled member bounding an internal volume,
**characterized in that**
- the partition comprises at least one carrier element (4) distinct from any element accommodating the diodes, notably distinct from the PCBs or from the receiving profiled member for the PCBs, said carrier element being arranged in the internal volume of the lower (2) and/or upper (9) mounting profiled member, and comprising means of support (40) such as a platen which is at a distance from the central section (20) of the mounting profiled member and situated between the edge face of the glazing unit and the diodes,
- the platen (40) of the carrier element (4) is associated with the first lateral section (21, 91) of the profiled member and has a free edge (47) facing the second lateral section (22, 92) of the profiled member,
- at the bottom of the partition, the platen (40) supports the glazing unit directly or potentially via a transparent wedge (8) positioned underneath,
- and/or at the top, the PCB or PCBs (31) and/or the receiving profiled member (32) for the PCB or PCBs are sitting on the platen (40),
- the PCB or PCBs with the diodes are dissociable from the partition,
- the second lateral section (22, 92) of the lower (2) and upper (9) profiled members is mobile or removable.

2. The partition as claimed in claim 1, **characterized in that** the free edge (47) does not comprise any return in the direction of the central section (20) of the mounting profiled member being interposed between the diodes and the second lateral section of the mounting profiled member, nor is any barrier element disposed between the diodes and the mobile second lateral section (22, 92).

3. The partition as claimed in either of claims 1 and 2, **characterized in that** the carrier element (4) forms a member which is inserted by removable mounting or by rigid fixing, via an edge opposite to the free edge, referred to as holding edge, associated with the first lateral section of the mounting profiled member.

4. The partition as claimed in one of the preceding claims, **characterized in that** the carrier element (4) forms a member machined/profiled in a unitary manner with the first lateral section of the mounting profiled member.

5. The partition as claimed in one of the preceding claims, **characterized in that** it comprises a surface (5) for receiving the PCB or PCBs or the receiving profiled member (32) for the PCB or PCBs, where this receiving surface can be, for in the high position, the platen (4) by its face opposite (42) to the glazing unit.

6. The partition as claimed in one of the preceding claims, **characterized in that** the carrier element (4) forms an insert and has a general shape at least in the form of an 'L' according to a cross-sectional view transverse to its longitudinal extension, and comprises the support surface (40) arranged parallel to the central section (20) of the profiled member and a perpendicular side (43) associated with the first lateral section (21) of the mounting profiled member and/or with the central section, preferably abutted, fixed with clips, assembled under force.

7. The partition as claimed in one of claims 1 to 5, **characterized in that** the carrier element (4) forms an insert and has a general shape in the form of an 'F' according to a cross-sectional view transverse to its longitudinal extension.

8. The partition as claimed in the preceding claim, **characterized in that** the carrier element (4) comprises a shoulder (44) arranged in the extension of the side (43) and designed to cooperate by mutual interlocking with the surface of the first lateral section (21), said surface preferably having a cavity (25) in which the shoulder is wedged.

9. The partition as claimed in the preceding claim, **characterized in that** the side (43) and the shoulder (44) are set against the internal face (21a) of the first fixed lateral section (21) of the profiled member by their external vertical face (45) opposite to the platen (40), and held by cooperation with said lateral section.

10. The partition as claimed in either of claims 8 and 9, **characterized in that** the edge (48) of the platen opposite to the free edge (47), the side (43) and/or the shoulder (44) of the carrier element (4) cooperate with the first lateral section (21) of the profiled member by fixing means of the adhesive bonding type for example and/or by mutual interlocking means, such as cavities and protruding sections.

11. The partition as claimed in any one of the preceding claims, **characterized in that** the platen (40) comprises at least one orifice (45) or one full transparent window, preferably with an oblong geometry being continuous over virtually the whole length of the platen.

12. The partition as claimed in one of the preceding claims, **characterized in that** the PCB or PCBs or the receiving profiled member (32) for the PCBs are assembled so as to be free or provisionally fixed and removable by means of pivoting or retraction of the second lateral section of the mounting profiled member.

13. The partition as claimed in any one of the preceding claims, **characterized in that**, for the bottom or top part, the receiving profiled member (32) accommodating the PCB or PCBs with diodes is inserted into the mounting profiled member or, for the bottom part, the receiving profiled member (32) forms an integral part of the internal volume of the mounting profiled member, notably of the central section.

14. The partition as claimed in any one of the preceding claims, **characterized in that**, for the bottom part, it comprises a surface (5) for receiving the PCB or PCBs (31) or the receiving profiled member (32) for the PCBs, this receiving surface being associated with the carrier element (4) or with the profiled member notably with the central section, and is disposed between the platen (40) and the central section (20) of the profiled member, where said receiving surface can be solid or hollowed out, and/or in two parts (61, 62).

15. The partition as claimed in claim 5 or 14, **characterized in that** it comprises an accommodation (6) notably with two walls with returns (61, 62), the accommodation being arranged between the receiving surface (5) and the central section (20), the upper surface of the receiving accommodation being designed to form said receiving surface (5).

16. The partition as claimed in the preceding claim, **characterized in that** the association of the receiving profiled member (32) or else of the PCB (31) is made by being directly laid on the receiving surface (5), or by removable fixing means.

17. The partition as claimed in any one of the preceding claims, **characterized in that** it comprises at least two vertically butt-joined transparent modules and **in that** no lighting system is arranged on the vertical side of a glass module butt-joined to the other module.

18. The partition as claimed in any one of the preceding claims, **characterized in that** the lower mounting profiled member (2) of the partition comprises at least one transparent module (10), at least two carrier elements (4) arranged at the respective distal ends of the module and only extending partially over the length of said module.
